# EUROPEAN PATENT SPECIFICATION

(11) **EP 0 611 029 B1**
(45) Date of publication and mention of the grant of the patent: **09.10.1996**
(21) Application number: 94300090.1
(22) Date of filing: 06.01.1994
(51) Int. Cl.: A21C 3/06

(54) **Treatment of dough**
Teigbehandlung
Manipulation de pâte

(30) Priority: 16.01.1993 JP 21930/93
(43) Date of publication of application: 17.08.1994
(73) Proprietor: RHEON AUTOMATIC MACHINERY CO. LTD., Utsunomiya-shi Tochigi-ken (JP)
(72) Inventor: Hayashi, Torahiko, Utsunomiya-shi, Tochigi-ken (JP)
(74) Representative: Leale, Robin George

(56) References cited:
- US-A- 3 022 616

## Description

This invention relates to the treatment of dough, and particularly to an apparatus for reducing the tendency for unrolling of a bar-shaped dough body that has been produced by rolling up a sheet of dough. More specifically, it relates to an apparatus for more securely closing the seam of such a rolled up dough body.

Japanese Utility Model Early-Publication No. 64-52471 discloses apparatus whose purpose is to prevent the unrolling of a rolled up bar-shaped dough body. As shown in Figs. 13 and 14 of such publication, the apparatus comprises two rotating vertical rolls disposed above a conveyor and one rotating horizontal roll above the vertical rolls, to define a rectangular passage above the conveyor. A rolled up bar of bread dough is passed through the passage defined by the rolls, to form it into a substantially rectangular shape in cross-section.

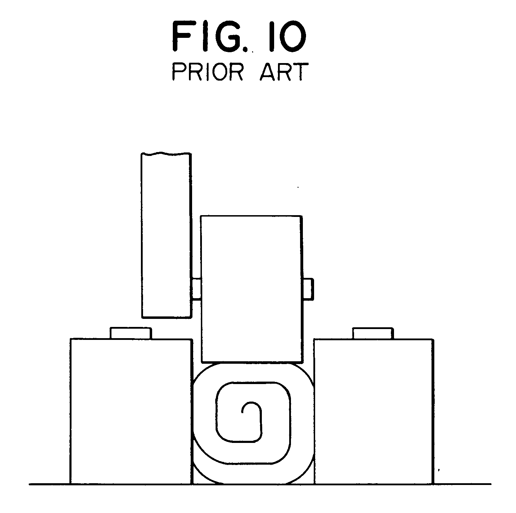

However, as shown in Fig. 10 of the accompanying drawings, as the passage formed by the said rolls has a rectangular cross section, only a comparatively weak inward force can be applied to the outer edge region of the rolled up dough body to cause it to adhere to the inwardly adjacent part of the body. Even if such outer edge region is pressed against the adjacent part of the body at a point near to a corner of the rectangular passage, as compared with a straight part thereof, the pressing force is still not concentrated enough to cause the edge region to securely adhere to the adjacent body part. Thus in this known apparatus the pressing force is weak, so that the edge tends to become detached from its adjacent body part after the body has been shaped.

Thus, half-finished bar-shaped dough products, such as those for French bread, that have been rolled up using this known technique, tend to become at least partly unrolled, to form spindle-shaped pieces of bread, when they are shaped or baked, thus becoming rejects. The maximum unrolling effect occurs towards the center of the length of a cut dough piece, since both of the ends have been compacted by the cutting process and do not unroll so readily. Thus a spindle-like form results. Consequently, up to now, bread made by rolling up a dough sheet cannot be formed with a seam which is closed tightly enough to result in a product which is reliably free from deformation caused by unrolling.

According to the present invention there is provided, in apparatus for forming a bar-shaped dough body from a dough sheet conveyed on a conveyor, by rolling up the sheet from one side thereof by means of a rolling up device, a mechanism for closing the seam of the rolled up-dough body, such mechanism comprising a pair of rotatable conical rolls disposed above the said conveyor and downstream of the said rolling up device, with their shafts positioned substantially vertically, the rolls being arranged to rotate in the downstream direction where they face each other, with their conical surfaces mutually converging so as to compress the dough body as it passes between them.

With such an arrangement, when the bar-shaped dough body passes through the V-shaped groove defined by the two conical rolls, the dough body is pulled toward the bottom of the groove, due to the surface speed of rotation of the rolls being greater there, so that the seam region of the rolled up dough body is pressed into the narrow bottom of the groove and thus securely closed.

Some embodiments of the invention will now be described by way of example and with reference to the accompanying drawings, in which:-
Fig. 1 is a perspective view of the apparatus of a first embodiment of the invention;
Figs. 2 to 4 are front views of the conical rolls of the apparatus of Fig. 1 showing successive stages in the seam-closing process;
Figs. 5 to 7 are similar front views of the conical rolls of a second embodiment;
Figs. 8 and 9 are front views of the conical rolls and a horizontal roll of a third embodiment; and
Fig. 10 is a front view of the prior art apparatus previously mentioned.

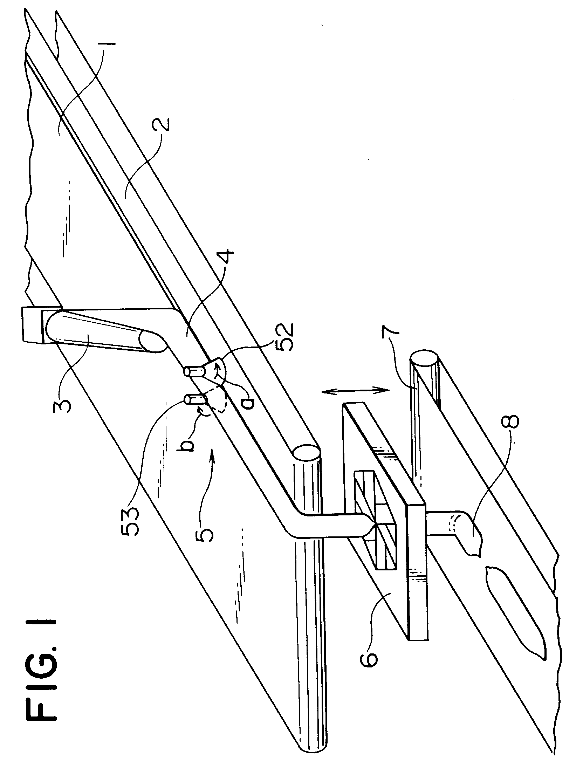

Referring first to Fig. 1, a rolling up device formed as a pivotable roll 3 is mounted on a frame of the apparatus and extends over the top of a first conveyor 2 for conveying a sheet of dough 1. A seam-closing apparatus 5 is disposed above the conveyor belt 2, in a path along which a bar-shaped dough body 4 is conveyed, downstream of the roll 3.

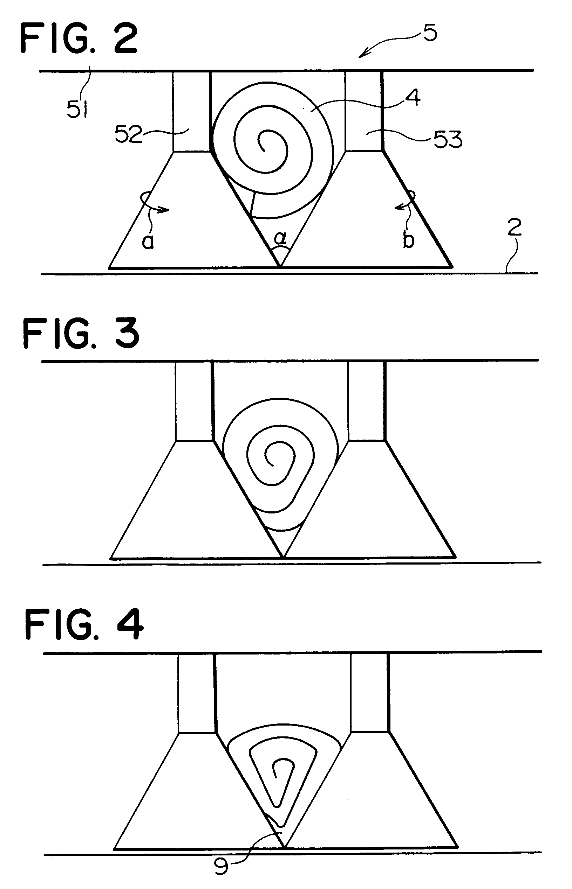

The seam-closing apparatus 5, which is shown only schematically in Fig. 1, consists of a left conical roll 52 and a right conical roll 53, both rotatably suspended from a beam 51 (Fig. 2) which is mounted on the apparatus frame and bridges the two conical rolls 52,53. The left roll 52 is on the left side of the path along which dough body 4 is conveyed and the right roll 53 is on the right side, as viewed from the upstream end.

The two conical rolls 52,53 are of the same size and shape. The upper part of each roll is cylindrical, whilst the lower part has the form of a truncated cone. The lowest part of each roll has the largest diameter and is located close to the first conveyor 2, where the peripheries of the two rolls are closely adjacent each other. They may indeed contact each other.

Inside the beam 51 is a conventional mechanism (not shown) consisting of chains and sprockets for rotating the left and right rolls 52,53 in the directions indicated by the arrows a,b. Thus the rolls are driven to rotate in the downstream direction where they face each other.

A cutting and shaping mechanism 6, which is movable up and down, such as is described in European Patent No. 230368, is located below the downstream end of the first conveyor 2, to produce half-finished products 8. A second conveyor 7 is disposed under the cutting and shaping apparatus 6 to convey the half-finished products 8 to the next station.

In operation the dough sheet 1 is rolled up by the roller 3 in helical fashion to form a bar-shaped dough body 4. This dough body 4 then passes between the conical rolls 52,53 and is thereby forced into the V-shaped groove defined by the conical parts of the rolls. In contrast to the rectangular passage formed by the aforementioned prior art apparatus, the distance between the opposite sides of the passage formed by the present apparatus decreases towards its bottom. Because of the manner of rotation of the rolls 52,53, tangential forces are exerted on the dough body 4 by the conical surfaces. As the surface velocity is greater at the lower parts of the rolls, because of their greater diameter there, the dough is urged downwardly and is thereby pressed into the bottom of the groove.

Thus, as shown in Figs. 2 to 4, the bar-shaped dough body 4 is urged downwardly towards parts of the conical surfaces which are moving at a higher peripheral speed, namely where the rolls have a larger diameter. As a result, the dough body 4 is forced into the bottom of the V-shaped groove, where the angle α formed by the conical surfaces is preferably an acute angle. Thus the dough body is highly compacted in comparison to that achieved by the aforementioned prior art apparatus, so that the edge part of the dough becomes tightly engaged with the body part inwardly thereof, to form a securely closed seam.

In the seam-closing process the dough body is introduced into the space between the conical rolls in such manner that the edge of the dough body is underneath, so that it abuts the surface of one of the conical rolls, as shown in Figs. 2 to 4. As shown in detail in Fig. 2, it is preferable to locate the edge of the dough so that it is slightly spaced upwardly from the lowest point, in the direction of rolling up of the dough, i.e. the clockwise direction in Fig. 2, so that the edge is made to contact a part of the conical surface of one of the rolls. The edge region is thus formed into a hook shape 9 (Fig. 4), which helps it to stick securely to the next inner layer of the dough body 4 when the seam-closing is completed, as shown.

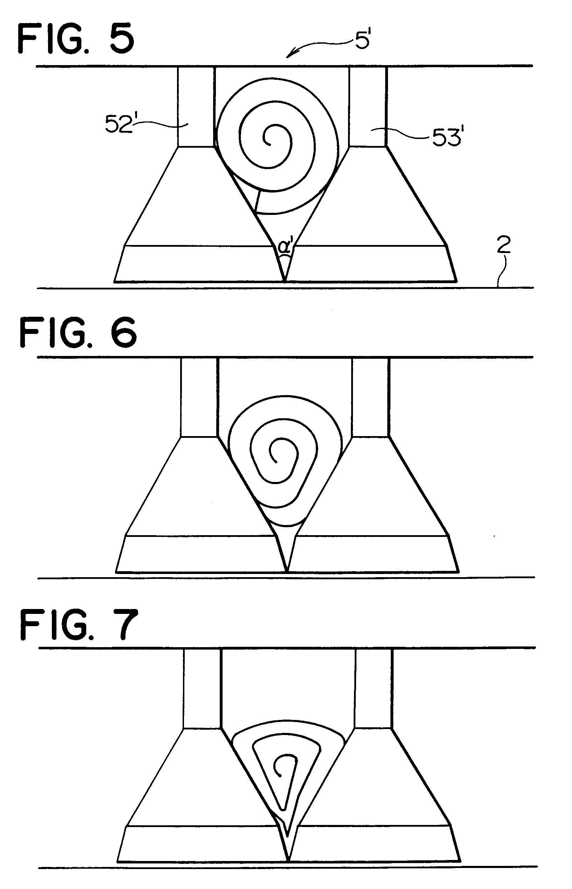

Figs. 5 to 7 show a second embodiment of the invention. This apparatus uses a pair of conical rolls 52',53' each having two slant surfaces with different angles of inclination, the lower part of each of the slant surfaces having a sharper acute angle than that of the surface above it. The thus-formed V-shaped groove has an angle α' at its bottom, sharper than the angle α in the first embodiment, so that the edge of the dough body can be more securely pressed into the groove and adhere even more strongly to the inner dough layer at the seam, as shown in Fig. 7. There can be more than two slant surfaces, each with a different angle of inclination.

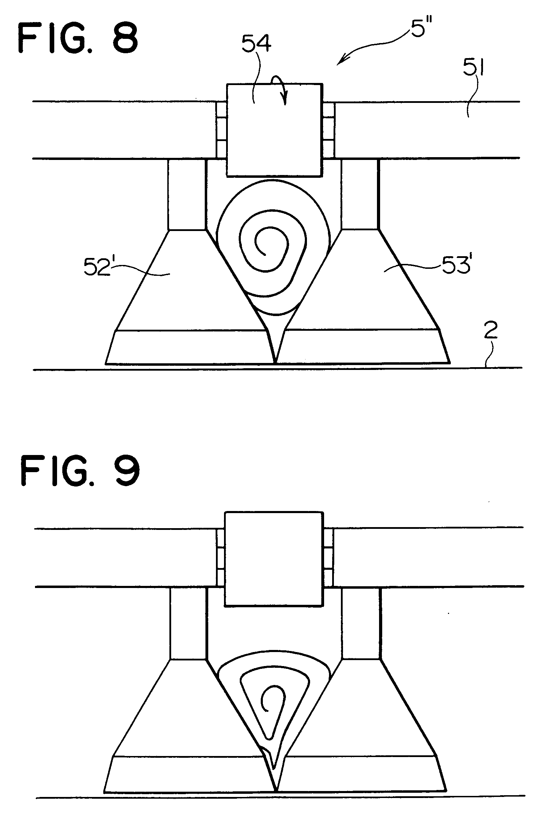

Figs. 8 and 9 show a third embodiment of the invention. Here at least one upper horizontal roll 54 is also provided above a pair of conical rolls 52',53', to enhance the pressing effect. The horizontal roll 54 is rotatable and may be mounted on the beam 51, as shown. Thus the rolled up bar-shaped dough body is pressed downwardly against the surfaces of the conical rolls. This is especially effective when the elasticity of the dough is high.

The quality of bread and cakes made by rolling up a sheet of dough into a bar-shaped body and then dividing and shaping the rolled dough bar is superior to that of those made using extrusion. Consequently, this invention makes it easier to provide high quality products, by increasing the yield thereof through lowering the number of rejects. Further, the invention makes possible an increase in saleable food products from an automated production line.

## Claims

1. Apparatus for forming a bar-shaped dough body (4) from a dough sheet (1) conveyed on a conveyor (2), by rolling up the sheet from one side thereof by means of a rolling up device (3), comprising a mechanism for closing the seam of the rolled up dough body, characterised in that the closing mechanism comprises a pair of rotatable conical rolls (52,53) disposed above the said conveyor and downstream of the said rolling up device (3), with their shafts positioned substantially vertically, the rolls (52,53) being arranged to rotate in the downstream direction where they face each other, with their conical surfaces mutually converging so as to compress the dough body (4) as it passes between them.

2. Apparatus as claimed in claim 1, wherein each said conical roll (52',53') has a plurality of conical surfaces with different angles of inclination.

3. Apparatus as claimed in claim 1 or 2, wherein each said conical roll is positioned with its base facing the conveyor.

4. Apparatus as claimed in claim 3, wherein at least one horizontal rotatable roll (54) is mounted above the conical rolls and arranged to compress the dough body passing between the conical rolls.

## Patentansprüche

1. Vorrichtung zum Bilden eines stangenförmigen Teigkörpers (4) aus einer auf einem Förderer (2) geförderten Teigbahn (1) durch Aufrollen der Bahn von einer ihrer Seiten mittels einer Aufrolleinrichtung (3), umfassend einen Mechanismus zum Schließen des Randes des aufgerollten Teigkörpers, dadurch gekennzeichnet, daß der Schließmechanismus ein Paar von drehbaren konischen Rollen (52, 53) aufweist, die über dem Förderer und stromabwärts der Aufrolleinrichtung (3) angeordnet sind und deren Schaft bzw. Welle im wesentlichen vertikal angeordnet ist, wobei die Rollen (52, 53) derart angeordnet sind, daß sie dort, wo sie einander zugewandt sind, sich in der Stromabwärtsrichtung drehen, und wobei ihre konischen Flächen gegenseitig bzw. beiderseits derart konvergieren, daß sie den Teigkörper (4) zusammendrücken, wenn dieser zwischen ihnen hindurchgeht.

2. Vorrichtung nach Anspruch 1, in welcher jede konische Rolle (52', 53') eine Mehrzahl von konischen Flächen mit unterschiedlichen Schrägwinkeln hat.

3. Vorrichtung nach Anspruch 1 oder 2, in welcher jede konische Rolle so angeordnet ist, daß ihre Basis dem Förderer zugewandt ist.

4. Vorrichtung nach Anspruch 3, in welcher wenigstens eine horizontale drehbare Rolle (54) über den konischen Rollen angebracht und derart angeordnet ist, daß sie den Teigkörper zusammendrückt, der zwischen den konischen Rollen hindurchgeht.

## Revendications

1. Appareil pour façonner une masse de pâte (4) en forme de barre à partir d'une feuille (1) de pâte transportée sur un transporteur (2), en enroulant la feuille depuis l'un de ses côtés au moyen d'un dispositif (3) d'enroulement, comportant un mécanisme destiné à fermer le joint de la masse de pâte enroulée, caractérisé en ce que le mécanisme de fermeture comporte une paire de rouleaux coniques tournants (52, 53) disposés au-dessus dudit transporteur et en aval dudit dispositif d'enroulement (3), leurs axes étant positionnés sensiblement verticalement, les rouleaux (52, 53) étant disposés de façon à tourner vers l'aval dans la zone où ils font face, leurs surfaces coniques étant mutuellement convergentes de façon à comprimer la masse de pâte (4) à son passage entre elles.

2. Appareil selon la revendication 1, dans lequel chacun desdits rouleaux coniques (52', 53') présente plusieurs surfaces coniques ayant des angles d'inclinaison différents.

3. Appareil selon la revendication 1 ou 2, dans lequel chacun desdits rouleaux coniques est positionné de façon que sa base soit tournée vers le transporteur.

4. Appareil selon la revdendication 3, dans lequel au moins un rouleau tournant horizontal (54) est monté au-dessus des rouleaux coniques et est disposé de façon à comprimer la masse de pâte passant entre les rouleaux coniques.
